(19) **Europäisches Patentamt / European Patent Office / Office européen des brevets**

(11) **EP 3 196 245 B1**

(12) # EUROPEAN PATENT SPECIFICATION

(45) Date of publication and mention
of the grant of the patent:
**12.07.2023 Bulletin 2023/28**

(21) Application number: **15842223.8**

(22) Date of filing: **16.09.2015**

(51) International Patent Classification (IPC):
**C08L 23/04** *(2006.01)*    **C08J 11/04** *(2006.01)*
**C08K 3/22** *(2006.01)*    **C08K 3/26** *(2006.01)*
**C08L 23/10** *(2006.01)*    **C08L 25/04** *(2006.01)*
**C08L 23/06** *(2006.01)*    **C08L 23/12** *(2006.01)*
**C08L 25/06** *(2006.01)*

(52) Cooperative Patent Classification (CPC):
(C-Sets available)
**C08J 11/04; C08K 3/22; C08K 3/26; C08L 23/06;
C08L 23/12; C08L 25/06**                    (Cont.)

(86) International application number:
**PCT/JP2015/076242**

(87) International publication number:
**WO 2016/043207 (24.03.2016 Gazette 2016/12)**

(54) **CABLE TROUGH MOLDED ARTICLE FORMED OF A FLAME-RETARDANT RESIN COMPOSITION**

KABELKANAL GEFORMT AUS EINER FLAMMHEMMENDEN HARZZUSAMMENSETZUNG

CHEMIN DE CÂBLES FORMÉ D'UNE COMPOSITION DE RÉSINE IGNIFUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2014 JP 2014190599**

(43) Date of publication of application:
**26.07.2017 Bulletin 2017/30**

(73) Proprietor: **Furukawa Electric Co. Ltd.
Tokyo 100-8322 (JP)**

(72) Inventors:
• **MITSUGI, Shingo**
  **Tokyo 100-8322 (JP)**
• **HIROISHI, Jirou**
  **Tokyo 100-8322 (JP)**
• **HABU, Koji**
  **Tokyo 100-8322 (JP)**
• **WADA, Naoto**
  **Tokyo 100-8322 (JP)**
• **NAKAJIMA, Yasuo**
  **Tokyo 100-8322 (JP)**

(74) Representative: **Forstmeyer, Dietmar et al
Boeters & Lieck
Oberanger 32
80331 München (DE)**

(56) References cited:
**EP-A1- 0 831 120        WO-A1-2004/074361
JP-A- H0 595 617        JP-A- 2005 213 480
JP-A- 2008 063 558**

**(Cont. next page)**

EP 3 196 245 B1

(52) Cooperative Patent Classification (CPC): (Cont.)

C-Sets
**C08L 23/06, C08K 3/22, C08K 3/26, C08L 23/12,
C08L 25/06**

C-Sets

## Description

### TECHNICAL FIELD

The present invention relates to a cable trough molded article formed of a flame-retardant resin composition.

### BACKGROUND ART

In the past, as a material of a cable trough, use has been made of a concrete. However, in recent years, studies have been made of the use of a resin-made trough, in place of the concrete.

Further, as a material of an insulating layer and a sheath layer for electric wire or cable, Patent Literature 1 proposes a resin composition in which 20 to 150 mass parts of a flame retardant composed of a metal hydroxide is mixed with 0 to 100 mass parts of a resin containing an ethylene/ethyl acrylate copolymer, an ethylene/vinyl acetate copolymer or the like, and further, in order to prevent whitening of the metal hydroxide by carbonation, a calcium carbonate is mixed therewith in an amount of about 0.8 to about 5.0 times as much as the metal hydroxide. Patent Literature 1 describes that this resin composition allows a mechanical strength to be retained, without generating a hazardous gas, such as hydrogen halide, at the time of combustion, so that contradictory problems of flame retardance and resistance to carbon dioxide whitening property are resolved.

Further, Patent Literature 2 proposes a tubular-formed conduit having an unevenness at the surface thereof, which is composed of a resin composition having incorporated therein a surface-treated metal hydride in order to give flame retardance thereto, in an amount of 3 to 39 weight parts with respect to from 0 to 100 weight parts of the resin containing an ethylene/ethyl acrylate copolymer, an ethylene/vinyl acetate copolymer or the like,. Patent Literature 2 describes that this allows gain of a conduit to which both mechanical properties and flame retardance have been given, with a minimum use of or without using a halogen-based flame retardant and a phosphorus-based flame retardant.

Further, in recent years, as a resin material, a trough formed through the use of a waste plastic has been studied, from the viewpoint of practicing a recyle of the plastic. For example, Patent Literature 3 proposes a resin composition in which a waste plastic containing a polyethylene, a polypropylene, a polystyrene, and the like, is used as a part or all of the resin. Patent Literature 3 describes that a molded article shaped from the resin composition has impact resistance, bending elastic modulus, and flame retardance.

### CITATION LIST

### PATENT LITERATURES

Patent Literature 1: JP-A-2005-213480 ("JP-A" means unexamined published Japanese patent application)
Patent Literature 2: JP-A-2003-004178
Patent Literature 3: JP-A-2008-063558

EP 0 831 120 A1 discloses a halogen-free additive composition, for polymer compounds with a halogen-free polymer base, that confers flame-retardant properties to the polymer to which is added. EP 0 831 120 A1 also discloses an electric wire cable sheath which needs flexibility having a resin composition of a polyolefin including ethylene vinyl acetate (EVA) and inorganic substances.

WO 2004/074361 A1 discloses a flame-retardant composition comprising an EVA-based copolymer containing a nano-silicate, a metal hydroxide, and calcium carbonate. WO 2004/074361 A1 does not disclose a resin composition containing polyethylene, polypropylene, and polystyrene without an EVA-based copolymer. Further, WO 2004/074361 A1 does not disclose the particular ratio and range of the magnesium hydroxide and calcium carbonate of the present invention.

### SUMMARY OF INVENTION

### TECHNICAL PROBLEM

The magnesium hydroxide which is excellent in flame retardance is expensive among inorganic flame retardants. The lesser the addition amount is, the better for the cost saving. Further, the magnesium hydroxide is expensive when compared to a waste plastic. Therefore, the lesser the addition amount is, the better for the cost saving. However, if the addition amount of the magnesium hydroxide is reduced to a definite amount or less, the flame retardance is drastically lowered. For this reason, in Patent Literature 3, a large amount of the magnesium hydroxide is added for improvement in flame retardance. If a large amount of the magnesium hydroxide is used, this brings a disadvantage from the aspect of cost as described above. In addition, as a result of continuous repetition of production and working, it was found that the magnesium hydroxide is apt to clog at a hopper part of the extruder in the time of working and shaping. This caused a concern about the possibilities that a working step is temporarily interrupted in working, which results in lowering of production efficiency, and further if a quantitative feed from a hopper of the extruder cannot be done, variation in quality occurs.

In view of the foregoing situation, the present invention is for providing a cable trough molded article formed of a flame-retardant resin composition, which maintains high flame retardance, which is excellent in both impact resistance and ignition resistance, which also is excellent in workability, and which also is able to realize its production at a low cost.

SOLUTION TO PROBLEM

As a result of extensive studies for dissolving the above-described problems, the inventors of the present invention have found that high flame retardance and impact resistance, and excellent workability are achieved by incorporating a given amount of each of a magnesium hydroxide and a calcium carbonate in a resin containing a specific amount of each of a polyethylene, a polypropylene, and a polystyrene. The present invention has been completed on the basis of this knowledge.

According to the present invention, there is provided the following means:

(1) A cable trough molded article formed of a flame-retardant resin composition, comprising a resin (A) containing from 10 to 85 mass% of a polyethylene, from 4 to 85 mass% of a polypropylene, and from 0 to 40 mass% of a polystyrene, and satisfying both the following relationships (1) and (2), provided that the amount of a magnesium hydroxide (B) is y mass parts and the amount of a calcium carbonate (C) is x mass parts with respect to 100 mass parts of the resin (A),

wherein the value of the molded article obtained by injection-molding the flame-retardant resin composition, which is obtained by Izod impact test (thickness of specimen 4 mm, notch 2 mm) in accordance with JIS K7110, is 5.0 kJ/m$^2$ or more, and

wherein the flame-retardant resin composition meets the criteria of "the flame retardance having self-extinguishing characteristics of the tube or trough housing underground electric wires" Test method JESC E7003 (2005)":

$$(1) \quad 48 \geqq x \geqq 10;$$

$$(2) \quad 30 > y \geqq -0.19x + 28.8.$$

(2) The cable trough molded article formed of the flame-retardant resin composition described in item 1, wherein the magnesium hydroxide (B) is surface-treated with an aliphatic acid.

(3) The cable trough molded article formed of the flame-retardant resin composition described in item 1 or item 2, wherein an average particle size of the calcium carbonate is 4 $\mu$m or less.

(4) The cable trough molded article formed of the flame-retardant resin composition described in item any one of items 1 to 3, wherein a resin component contained in the flame-retardant resin composition to form the cable trough molded article only consists of polyethylene, polypropylene, and polystyrene.

(5) The cable trough molded article formed of the flame-retardant resin composition described in item any one of items 1 to 4, wherein the resin of the resin (A) selected from at least the polyethylene, polypropylene, and polystyrene comprises a waste plastic.

(6) The cable trough molded article formed of the flame-retardant resin composition described in item any one of items 1 to 5, wherein the flame-retardant resin composition further comprises a titanium oxide, wherein a content of the titanium oxide is from 0.7 to 25 mass parts with respesct to 100 mass parts of the resin (A).

ADVANTAGEOUS EFFECTS OF INVENTION

The present invention enables to provide a cable trough molded article formed of a flame-retardant resin composition, which maintains high flame retardance, which is excellent in both impact resistance and ignition resistance, which is also excellent in workability, and which also is able to realize its production at a low cost.

This enables a stable production with a low cost of the above-described excellent cable trough molded article formed of a flame-retardant resin composition.

In the present invention, a magnesium hydroxide and a calcium carbonate are used in combination while maintaining a specific relationship with respect to a specific resin.

Herein, although a function of the combination of the magnesium hydroxide with the calcium carbonate has not yet known, it is supposed that even if a total blend amount of the inorganic substance is lessened, high flame retardance and excellent ignition resistance can be obtained, by the action of generation of a non-flammable gas, such as carbon dioxide and moisture.

Further, an addition amount of an expensive magnesium hydroxide can be lowered, so that the present invention has an advantage of a cost saving. In particular, it is effective from the above aspect that use can be made of a natural magnesium hydroxide and a non-crystalline growth-type magnesium hydroxide. Further, by using a waste plastic as the above-described resin, the present invention can supply stably a cable trough molded article formed of a flame-retardant resin composition, which is excellent in impact resistance and ignition resistance, without decreasing production efficiency, while maintaining high flame retardance, together with a low cost and also excellent workability.

Further, by using a magnesium hydroxide and a calcium carbonate as an inorganic substance, a hazardous gas is not generated at the time of combustion, so that an environment-friendly resin composition can be obtained.

MODE FOR CARRYING OUT THE INVENTION

<<Flame-retardant resin composition>>

The flame-retardant resin composition is a flame-retardant resin composition, which contains a specific amount of each of a magnesium hydroxide (B) and a calcium carbonate (C) in a specific relationship, with respect to 100 mass parts of a resin (A) containing from 10 to 85 mass% of a polyethylene, from 4 to 85 mass% of a polypropylene, and from 0 to 40 mass% of a polystyrene, and which meets the criteria of ""the flame retardance having self-extinguishing characteristics" of the tube or trough housing underground electric wires Test method JESC E7003(2005)".

Note that, the sum of a polyethylene, a polypropylene and a polystyrene contained in the resin (A) is never more than 100 mass%.

Hereinafter, each component of the resin (A) is described.

<Polyethylene>

Examples of the polyethylene that can be used in the present invention include a high-density polyethylene, a medium-density polyethylene, a low-density polyethylene, a straight-chain low-density polyethylene, a copolymer of ethylene and $\alpha$-olefin, and the like. Specifically, examples of the polyethylene include an NUC polyethylene (trade name, manufactured by NUC Corporation), UBE polyethylene (trade name, manufactured by Ube Industries, Ltd.) and the like. However, the present invention is not limited to those.

The content of the polyethylene is preferably from 10 to 85 mass% and more polyethylene from 15 to 70 mass%, of the resin (A). This is because if the polyethylene is too large, it becomes difficult to obtain a sufficient elastic modulus, whereas too little polyethylene is in danger of lowering in impact resistance.

<Polypropylene>

Examples of the polypropylene that can be used in the present invention include a homopolymer of propylene, a block, random, or graft copolymer of polypropylene and $\alpha$-olefin, or a mixture thereof, and the like. Examples of the $\alpha$-olefin include ethylene, butene, pentene, hexene, heptene, 4-methyl pentene, and the like. Specifically, examples of the $\alpha$-olefin include BC4L (trade name, manufactured by Japan Polychem Corporation) and the like. However, the present invention is not limited to those.

The content of the polypropylene is preferably from 4 to 85 mass% and more preferably from 10 to 70 mass%, of the resin (A). This is because if the polypropylene is too large, there is in danger of lowering in impact resistance, whereas too little polypropylene is in danger of lowering in elastic modulus.

<Polystyrene>

As the polystyrene that can be used in the present invention, use may be made of a homopolymer or copolymer of styrene. Examples thereof include polystyrene, poly(p-methyl styrene), poly(m-methyl styrene), poly(ethyl styrene), poly(divinyl benzene), and the like. Specifically, examples of the polystyrene include HF77 (trade name, manufactured by PS Japan Corporation) and the like. However, the present invention is not limited to those.

The content of the polystyrene is preferably from 0 to 40 mass% and more preferably from 5 to 20 mass%, of the resin (A). This is because if the polystyrene is too large, there is in danger of lowering in impact resistance, whereas too little polystyrene is in danger of lowering in elastic modulus.

In the present invention, the resin (A) contains from 10 to 85 mass% of a polyethylene, from 4 to 85 mass% of a polypropylene, and from 0 to 40 mass% of a polystyrene. Herein, another resin component(s) may be contained in the resin (A) in an extent which does not impair characteristics of the present invention. As the another resin component(s), examples thereof include ethylene/vinyl acetate copolymer, ethylene/(meth)acrylic acid copolymer, ethylene/alkyl (meth)acrylate copolymer, and the like.

Further, in the present invention, a waste plastic may be used as a part of or all of the resin (A). As the waste plastic, at least one of a polyethylene, a polypropylene and a polystyrene may be a waste plastic, or all of them may be a waste plastic. Further, each of waste plastics consisting of a recovered elemental substance of each of a polyethylene, a polypropylene and a polystyrene may be blended and used, or a waste plastic in which a polyethylene, a polypropylene and a polystyrene have already been mixed at the recovery stage, and use may be made of the waste plastic, which is subjected to both volume reduction as it is and palletization.

As the waste plastic in which each of the resin components has already been mixed at the recovery stage, examples thereof include a waste plastic obtained by recovering containers, and the like, disposed from general household according to the Containers/Packaging Recycling Act.

The content of the waste plastic is preferably from 1 to 100 mass% and more preferably from 25 to 100 mass%, of the resin (A).

In the present invention, a mixing ratio of the waste plastic and another polymer(s) is adjusted so that a content of each of a polyethylene, a polypropylene and a polystyrene is within the content defined by the present invention.

<Magnesium hydroxide (B)>

The magnesium hydroxide that can be used in the present invention may be any of synthetic or natural and non-crystalline growth-type magnesium hydroxides. However, preferred are a natural magnesium hydroxide and a non-crystalline growth-type magnesium hydroxide.

As the natural magnesium hydroxide, preferred is a magnesium hydroxide obtained by pulverizing and surface-treating a natural mineral ore, such as natural blucite ore. As the non-crystalline growth-type magnesium hydroxide, examples thereof include a substance which is obtained by appropriately washing, filtrating and drying, without crystalline growth, from a colloidal precipitate which was obtained by a reaction of an aqueous solution of a magnesium salt contained in seawater or bittern, with an alkali, such as a hydrated lime. This substance is a synthetic compound and therefore this is free from commingling of impurities, such as arsenic and asbestos, and its price is the lowest of the magnesium hydroxides.

When the non-crystalline growth-type magnesium hydroxide is observed by an electronic microscope, there are a lot of secondary aggregates formed by aggregation of primary particles having a particle size of 0.01 to 1.99 $\mu$m, and there are a lot of secondary aggregates generally having a particle size of 3 $\mu$m or more. The non-crystalline growth-type magnesium hydroxide contains overlarge particles having a particle size of 2 to 40 $\mu$m in a large amount, and therefore is hard to be added to and dispersed in a resin. However, in the case where a magnesium hydroxide having a particle size of 2 to 40 $\mu$m and a magnesium hydroxide having a particle size of 0.01 to 1.99 $\mu$m are mixed within the mass ratio of 25:75 to 99:1, if a surface treatment agent is used in combination with the foregoing mixture of the magnesium hydroxides, a dispersion to the resin can be easily practiced.

A magnesium hydroxide is preferred, which has been surface-treated with a surface treatment agent. In particular, the natural magnesium hydroxide is composed of non-uniform particles and is rich in water-absorbing property, and therefore it is desirable to subject the natural magnesium hydroxide to a surface treatment.

Examples of the surface treatment include a surface treatment with an aliphatic acid, a phosphoric acid ester, or a silane coupling agent.

Examples of the aliphatic acid include stearic acid, oleic acid, palmitic acid, lauric acid, behenic acid, arachidic acid, and their metal salt compounds, such as a sodium salt and a potassium salt.

Examples of the phosphoric acid ester include stearyl alcohol phosphoric acid ester and its metallic salt, lauryl alcohol phosphoric acid ester and its metallic salt, and the like.

Examples of the silane coupling agent in the silane treatment include a silane coupling agent having an alkyl group, an alkoxy group, an amino group, a vinyl group, an acryloyloxy group, a methacryloyloxy group, an epoxy group, or the like, at its end.

These surface treatments may be practiced by two or more kinds of methods. Further, in the same kind of method, for example, in a surface treatment with an aliphatic acid, a surface treatment may be done by two or more different kinds of aliphatic acids.

In the present invention, among these surface treatments, it is preferred to use a substance subjected to a surface treatment with an aliphatic acid.

<Calcium carbonate(C)>

Examples of the calcium carbonate that can be used in the present invention include: a heavy calcium carbonate obtained by pulverizing a mineral ore, such as a limestone, a marble, and a calcite; a sedimentation calcium carbonate, or a light calcium carbonate, both of which are a synthetic stone; and the like. Among these materials, a heavy calcium carbonate is preferably used from the aspect of cost, whereas a synthetic calcium carbonate having a uniform particle size distribution is preferably used from the aspect of extrusion working property and physical property. In accordance with the intended use, these materials may be appropriately selected.

An average particle size of the calcium carbonate is preferably 4 $\mu$m or less, more preferably 3 $\mu$m or less, and still more preferably 2 $\mu$m or less. By selecting a calcium carbonate having a preferable average particle size, a preferable result is obtained from the aspects of a kneading property with the resin (A), a mechanical property of the obtained compound, and the like. Further, by using a calcium carbonate the surface of which has been subjected to a surface treatment with a surface treatment agent, such as an aliphatic acid-based, a fat-based, a surfactant-based, a wax-based, a phosphoric acid-based, or a silane-based surface treatment agent, an improvement can be achieved in terms of a kneading property with the basic resin and a mechanical property when used in the resin composition.

As for this surface treatment, the surface treatment described for the magnesium hydroxide is preferably applied.

<Blend amount of magnesium hydroxide and calcium carbonate>

As the blend amount of a calcium carbonate, it is only enough that the calcium carbonate is blended, in other words, the blend amount thereof is more than 0 mass parts. However, the blend amount of 10 mass parts or more is preferred from the aspects of cost and workability. In the present invention, the resin composition satisfies each of the following relationships (1) and (2), provided that the blend amount of a magnesium hydroxide (B) is y mass parts and the blend amount of a calcium carbonate (C) is x mass parts.

Note that, each mass part is an amount with respect to 100 mass parts of the resin (A).

$$(1) \quad 48 \geqq x \geqq 10$$

$$(2) \quad 30 > y \geqq -0.19x + 28.8$$

By satisfying the above relationships (1) and (2), the present invention achieves excellent flame retardance, impact resistance, and workability.

If the calcium carbonate is not contained, workability becomes worse. Further, in order to achieve satisfactory flame retardance and the like, much amount of expensive magnesium hydroxide must be used.

On the contrary, in the case where the calcium carbonate is blended in the amount of more than 48 mass parts, impact resistance becomes worse. In addition, when a waste plastic is used, this case brings a disadvantage in the cost.

Further, if the blend amount of the magnesium hydroxide is more than 30 mass parts, workability becomes worse. This also brings a disadvantage in the cost. Note that, as is apparent from the above relationships of (1) and (2), the lowest blend amount of the magnesium hydroxide is 19.68 mass parts or more. If the blend amount of the magnesium hydroxide is less than 19.68 mass parts, flame retardance becomes worse.

Herein, as is apparent from the above relationships of (1) and (2), a total amount of the magnesium hydroxide and the calcium carbonate is from 36.9 mass parts or more and less than 78 mass parts.

If the total amount of the magnesium hydroxide and the calcium carbonate is less than 36.9 mass parts, flame retardance becomes worse. On the contrary, if the total amount of the magnesium hydroxide and the calcium carbonate is more than 78 mass parts, this brings a disadvantage in the cost and impact resistance becomes worse.

In the present invention, the above relationship (1) is preferably the following relationship (1-1) and more preferably the following relationship (1-2).

$$(1\text{-}1)\ 48 \geqq x \geqq 27$$

$$(1\text{-}2)\ 48 \geqq x \geqq 31$$

Note that, as the case of the above relationship (1-2), a more preferable relationship is to satisfy the following (1-2) and (2) at the same time.

$$(1\text{-}2)\ 48 \geqq x \geqq 31$$

$$(2)\ 30 > y \geqq -0.19x + 28.8$$

<Other inorganic compound>

In the present invention, any of inorganic compounds other than the magnesium hydroxide and the calcium carbonate may be contained as an inorganic compound.

The foregoing inorganic compound includes a titanium oxide. In the case of containing a titanium oxide, its content is preferably from 0.7 to 25 mass parts and more preferably from 1 to 25 mass parts, with respect to 100 mass parts of the resin (A). Note that, a blend of a given amount of the titanium oxide allows improvement in weather resistance and adjustment of tone.

As the titanium oxide, there are a titanium oxide (rutile-type titanium oxide) having a rutile-type crystalline structure, or those in which a rutile-type titanium oxide and a titanium oxide (anatase-type titanium oxide) having an anatase-type crystalline structure are contained. A preferable titanium oxide is a rutile-type titanium oxide. Further, a titanium oxide surface of which has been treated with a surface treatment agent is preferred. Herein, examples of the surface treatment agent include aluminum, silica, an organic siloxane, and the like.

<Other compound>

In the flame-retardant resin composition, any of additives, such as an antioxidant, a light stabilizer, an ultraviolet ray absorbent, and an antistatic agent, each of which is ordinarily added to a resin, may be appropriately blended to the extent that does not deteriorate characteristic property of the present invention.

In the present invention, it is particularly preferred that an antioxidant and a light stabilizer are contained. As the antioxidant, a phenol-based antioxidant is preferred, and as the light stabilizer, an HALS (hindered amine light stabilizer)-based light stabilizer is preferred.

Examples of the phenol-based antioxidant include 2,6-di-tert-butyl-4-methylphenol, 2,2-methylene bis(4-methyl-6-tert-butylphenol), 4,4'-butylidene bis(3-methyl-6-tert-butylphenol), 4,4'-methylene bis(2,6-di-tert-butylphenol), 2,2-methylene bis(4-metyl-6-tert-butylphenol), and the like.

The HALS-based light stabilizer is generally a compound having a 2,2,6,6-tetramethyl-4-piperidinyl skeleton. Trade names: TINUVIN 111FDL, TINUVIN 123, TINUVIN 144, TINUVIN 292, TINUVIN 770, TINUVIN 770DF, TINUVIN 5100 and the like are commercially available from Ciba Specialty Chemicals Limited.

The content of the antioxidant or the light stabilizer is preferably from 0.01 to 0.50 mass parts and more preferably from 0.05 to 0.30 mass parts, with respect to 100 mass parts of the resin (A).

<Production method of flame-retardant resin >

The production method of the flame-retardant resin is not particularly limited only as a single process or a single device. However, for example, use can be made of solely or in combination of kneading device(s), such as a kneading roll, a kneader, a uniaxial extruder, a biaxial extruder, a banbury mixer, and the like.

<Molded article>

Although a shape of the molded article of the present invention is not particularly limited, examples of the molded article include a trough, a cable duct, a drain, a pit lid, and the like. A shape-forming method of the molded article of the present invention can be selected appropriately according to a kind, a shape, a size, and the like of the article to be formed. Examples thereof include a press molding, an injection molding, a compression molding, an extrusion molding, and the like.

The molded article of the present invention is excellent in impact resistance, flame retardance, and heat resistance, and therefore it compares favorably with a concrete trough and can be used as a trough. Further, the trough of the present invention is more lightweight than the concrete trough and therefore it is easily installed, and further it has good handling property in the manner such that it does not get broken even if dropped. Further, the molded article of the present invention is low in cost, because a waste plastic can be used for it. Accordingly, the molded article of the present invention can be preferably used as a trough in particular. The trough of the present invention can be produced using the above-described flame-retardant resin composition, for example, by an ordinary press molding.

The flame-retardant resin composition, if it is formed as a molded article thereof, meets the criteria of ""the flame retardance having self-extinguishing characteristics" of the tube or trough housing underground electric wires, Test method JESC E7003 (2005)". The criteria by this test method are based on those of Japan Electrotechnical Standards and Codes Committee and can be downroad from a website of Japan Electrotechnical Standards and Codes Committee: http://jesc.gr.jp/jesc-assent/quotation/jesc_e7003_05.html.

According to the above criteria, the case where a test sample obtained from a molded article which is made by shape-forming a resin composition is burned by a reducing flame of the Bunsen burner having about 130 mm length and burns out within 60 seconds after the flame has been removed, is determined as "conformation".

Further, there are also criteria of "Ordinance manifesting a Technical Requirement of Electrical Appliances, the Appended Supplementary Table 2, and No. 24. Flame Resistant Property Test" prescribed in "Ordinance manifesting a Technical Requirement of Electrical Appliances" of the October 27, 2004 Ordinance of Ministry of Economy, Trade and Industry, No. 103 which is a revised ordinance of the August 14, 1962 Ordinance of Ministry of International Trade and Industry, No. 85. The present invention also conforms to this Requirement. Note that, in this criterion, the case where a sample is not ignited by a flame is determined as "conformation".

EXAMPLES

The present invention will be described in more detail based on examples given below, but the invention is not meant to be limited by these.

Examples 1 to 13 and Comparative Examples 1 to 20

A mixture in which each of materials shown in Tables 2 to 4 has been blended in the proportions shown therein (those numerical numbers indicate mass parts) was kneaded by a biaxial extruder, thereby to obtain each thermoplastic resin composition. After that, by an injection molding, each test specimen was prepared.

In this regard, the materials to be used are as follows.

<Resin A>

As the Resin A, use was made of the following waste plastic 1.

·Waste plastic 1: a waste plastic recovered according to the Containers/Packaging Recycling Act (a polyethylene 70 mass%, a polypropylene 20 mass%, and a polystyrene 10 mass%)

<Magnesium hydroxide>

·Magnesium hydroxide A1: Aliphatic acid-surface-treated magnesium hydroxide (trade name "MAGLUX ST", manufactured by Shinko Kogyo Co., Ltd.)
·Magnesium hydroxide A2: Non-surface-treated magnesium hydroxide (Chinese raw material: a brucite, trade name "BRUCITE", manufactured by Sanko Co., Ltd.)
·Magnesium hydroxide A3: Aliphatic acid-surface-treated magnesium hydroxide (trade name "MAGSIES W", manufactured by Konoshima Chemical Co., Ltd.)
·Magnesium hydroxide A4: Non-surface-treated magnesium hydroxide (trade name "UD-650-1", manufactured by Ube Materials Industries, Co., Ltd.)

<Mass decrease rate>

From the measurement of mass decrease rate of the above-described magnesium hydroxides A1 to A4, the results shown in the follow Table 1 were obtained.

The magnesium hydroxide was put on a pan, and a difference in mass (mass decrease rate) before and after the change which is caused in the temperature range of 240°C to 400°C by rising a temperature at the rate of temperature elevation of 10°C/min under a nitrogen gas flow at the flow rate of 200ml/min, was measured, by a thermogravimetric measurement device (trade name: TG-DTA200, manufactured by Seiko Instruments, Inc.).

Table 1

| Kind of magnesium hydroxide | Surface treatment | Mass decrease rate (mass%) |
|---|---|---|
| Magnesium hydroxide A1 | Done | 24.8 |
| Magnesium hydroxide A2 | None | 19.8 |
| Magnesium hydroxide A3 | Done | 23.0 |
| Magnesium hydroxide A4 | None | 24.8 |
| Mass decrease rate: 240°C to 400°C | | |

<Calcium carbonate>

Calcium carbonate B: Average particle size 1.5 $\mu$m (trade name "SOFTON 1500", Bihoku Funka Kogyo Co., Ltd.)

With respect to Examples 1 to 13 and Comparative Examples 1 to 20, the following evaluations were carried out.

<Flame retardance test>

The test samples were prepared as describes below in conformity with ""The standard of Japan Electrotechnical Standards and Codes Committee "the flame retardance having self-extinguishing characteristics" of the tube or trough housing underground electric wires, Test method JESC E7003 (2005)". As a source of heat, a Bunsen burner was used, and a length of the oxidizing flame and a length of the reducing flame were, respectively, adjusted to about 130 mm and about 35 mm. The test sample is cut off from a finished product under normal circumstances. However, in this case, prepared was a ribbed sheet (length: about 300 mm, width: 200 mm, thickness: 15 mm) which was almost the same as a finished product. The sample was horizontally supported, and a planar section thereof was burned until the planar section is ignited. Then, a sample which burned out within 60 seconds after removing the flame was ranked as [o] (good), while a sample which did not burn out within 60 seconds after removing the flame was ranked as [×] (poor).

<Flammability test in terms of oxygen index (OI value)>

Measurement of specimens having a thickness of 4 mm and a notch of 2 mm for the flammability test in terms of oxygen index (OI value) was carried out, in conformity with JIS K7201-2.

Note that, the oxygen index indicates a minimum oxygen concentration (volume%) which a material needs for the continuation of burning.

<Izod impact test>

Measurement of specimens having a thickness of 4 mm and a notch of 2 mm was carried out, in conformity with JIS K7110.

The obtained value of 5 kJ/m$^2$ or more indicates an acceptance level and is ranked as [o] (good), whereas the obtained value of less than 5 kJ/m$^2$ indicates not passing the test and is ranked as [×] (poor).

In Tables 2 to 4, the above-described evaluation ranks were also shown, together with the obtained values.

<Workability>

In the 3-hour extrusion molding using a hopper having an upper section of $\varphi$300 and an ejecting section of $\varphi$50, when clogging of the hopper part was affirmed, the workability was ranked as [×] (poor) and when clogging of the hopper part was not caused, the workability was ranked as [o] (good).

The obtained results are shown in the following Tables 2 to 4.

Table 2

| | Ex 1 | Ex 2 | Ex 3 | Ex 4 | Ex 5 | Ex 6 | Ex 7 | Ex 8 | Ex 9 | Ex 10 | Ex 11 | Ex 12 | Ex 13 |
|---|---|---|---|---|---|---|---|---|---|---|---|---|---|
| Waste plastic 1 | 100 | 100 | 100 | 100 | 100 | 100 | 100 | 100 | 100 | 100 | 100 | 100 | 100 |
| Magnesium hydroxide A1 | 29 | 27 | 29 | 27 | 23 | 27 | 25 | 20 | 29 | - | - | - | - |
| Magnesium hydroxide A2 | - | - | - | - | - | - | - | - | - | 29 | - | - | - |
| Magnesium hydroxide A3 | - | - | - | - | - | - | - | - | - | - | 29 | - | 23 |
| Magnesium hydroxide A4 | - | - | - | - | - | - | - | - | - | - | - | 29 | - |
| Calcium carbonate B | 10 | 15 | 23 | 27 | 31 | 35 | 42 | 47 | 48 | 23 | 23 | 23 | 31 |
| Flame retardance test | ○ | ○ | ○ | ○ | ○ | ○ | ○ | ○ | ○ | ○ | ○ | ○ | ○ |
| OI value (%) | 21.2 | 21.0 | 21.5 | 21.3 | 21.1 | 21.4 | 21.2 | 20.7 | 21.4 | 20.7 | 21 | 20.8 | 20.7 |
| Workability | ○ | ○ | ○ | ○ | ○ | ○ | ○ | ○ | ○ | ○ | ○ | ○ | ○ |
| Izod impact strength (kJ/m$^2$) | 6.2 | 6.4 | 7.0 | 6.6 | 6.2 | 6.1 | 5.5 | 5.0 | 5.6 | 5.0 | 5.5 | 6.2 | 6.2 |
| Impact resistance | ○ | ○ | ○ | ○ | ○ | ○ | ○ | ○ | ○ | ○ | ○ | ○ | ○ |
| Note: "Ex" means Example according to this invention. (The same will be applied to hereinafter.) | | | | | | | | | | | | | |

Table 3

| | C Ex 1 | C Ex 2 | C Ex 3 | C Ex 4 | C Ex 5 | C Ex 6 | C Ex 7 | C Ex 8 | C Ex 9 | C Ex 10 | C Ex 11 | C Ex 12 | C Ex 13 | C Ex 14 |
|---|---|---|---|---|---|---|---|---|---|---|---|---|---|---|
| Waste plastic 1 | 100 | 100 | 100 | 100 | 100 | 100 | 100 | 100 | 100 | 100 | 100 | 100 | 100 | 100 |
| Magnesium hydroxide A1 | 9 | 20 | 27 | 20 | 30 | 15 | 18 | 11 | 5 | 7 | 23 | 20 | 10 | 8 |
| Magnesium hydroxide A2 | - | - | - | - | - | - | - | - | - | - | - | - | - | - |
| Magnesium hydroxide A3 | - | - | - | - | - | - | - | - | - | - | - | - | - | - |
| Magnesium hydroxide A4 | - | - | - | - | - | - | - | - | - | - | - | - | - | - |
| Calcium carbonate B | 73 | 62 | 55 | 54 | 50 | 38 | - | - | - | 27 | 21 | 27 | 26 | 46 |
| Flame retardance test | ○ | ○ | ○ | ○ | ○ | × | × | × | × | × | × | × | × | × |
| OI value (%) | 20.6 | 21.2 | 22.0 | 21.0 | 21.9 | 20.5 | 19.6 | 19.2 | 18.8 | 19.8 | 20.3 | 20.3 | 20.1 | 20.0 |
| Workability | ○ | ○ | ○ | ○ | ○ | ○ | × | × | × | ○ | ○ | ○ | ○ | ○ |
| Izod impact strength (kJ/m$^2$) | 3.2 | 3.9 | 4.6 | 4.5 | 4.8 | 5.8 | 6.0 | 5.6 | 5.5 | 5.01 | 6.0 | 5.8 | 5.3 | 4.4 |
| Impact resistance | × | × | × | × | × | ○ | ○ | ○ | ○ | ○ | ○ | ○ | ○ | × |
| Note: "C Ex" means Comparative Example. (The same will be applied to hereinafter.) | | | | | | | | | | | | | | |

Table 4

|  | C Ex 15 | C Ex 16 | C Ex 17 | C Ex 18 | C Ex 19 | C Ex 20 |
|---|---|---|---|---|---|---|
| Waste plastic 1 | 100 | 100 | 100 | 100 | 100 | 100 |
| Magnesium hydroxide A1 | 8 | - | - | - | 30 | - |
| Magnesium hydroxide A2 | - | - | - | - | - | - |
| Magnesium hydroxide A3 | - | - | - | - | - | 77 |
| Magnesium hydroxide A4 | - | - | - | - | - | - |
| Calcium carbonate B | 58 | 54 | 67 | 82 | - | - |
| Flame retardance test | × | × | × | × | ○ | ○ |
| OI value (%) | 20.1 | 19.9 | 19.9 | 20.1 | 21.1 | 23.2 |
| Workability | ○ | ○ | ○ | ○ | × | × |
| Izod impact strength (kJ/m$^2$) | 3.8 | 3.5 | 2.9 | 2.7 | 6.2 | 6.5 |
| Impact resistance | × | × | × | × | ○ | ○ |

As is apparent from Tables 2 to 4, it is understood that, by respectively adjusting the content of a magnesium hydroxide and the content of a calcium carbonate to the range according to the present invention, the sample specimens meet the criteria for the flame retardance in terms of the self-extinguishing characteristics, and at the same time, the sample specimens have high OI value (volume%) which is a minimum oxygen concentration necessary for the continuation of burning, and the sample specimens are excellent in ignition resistance and also are excellent in impact resistance.

Further from comparison among Examples 3, 10 to 12, it is understood that, in the cases (Example 3 and Example 11) where a surface-treated magnesium hydroxide was used, the sample specimens have higher OI value and also the sample specimens are more excellent in the aspect of flame retardance, when compared to the cases (Examples 10 and 12) where non-surface-treated magnesium hydroxide was used. Further, it is understood that, by using the magnesium hydroxide (A1, A3, or A4) having as high as 20% or more mass decrease rate, the impact resistance is improved (comparison between Example 10 and Example 3, 11, or 12).

Note that, from the results of Comparative Examples 7 to 9 and 19 to 20, it is understood that it is necessary to use a magnesium hydroxide and a calcium carbonate in the respective amount specified by the present invention, in order to effectively produce the advantageous effects of the present invention.

Further, from the results of Comparative Examples 7 to 9 and 19 to 20, those which contain only a magnesium hydroxide without any of calcium carbonate in the traditional way, caused clogging at least 1 time at the hopper part in 3-hour working and therefore their workability was poor. Note that, as seen from Examples 1 to 9, it is understood that in those which contains a calcium carbonate, the clogging at the hopper part in 3-hour working is not found and therefore there is no problem about their workability. A combination use of a magnesium hydroxide and a calcium carbonate allowed a stable continuous working and molding, high production efficiency, and a stable supply. In this regard, it is anticipated that the influence of a high repose angle of the magnesium hydroxide which causes the clogging at the hopper part is mitigated by a calcium carbonate to be mixed with it.

Examples 14 to 20

A mixture in which each of materials shown in Table 5 was blended in the subscribed ratio (the values in the table indicate mass parts) was kneaded by a biaxial extruder, to obtain each thermoplastic resin composition. Thereafter, by an injection molding, each specimen was prepared.

Note that, materials to be newly used are as follows.

<Titanium oxide>

·Titanium oxide C: siloxane-surface-treated titanium oxide (trade name "TITONE R-11 ·P", manufactured by Sakai Chemical Industry, Co., Ltd., primary average particle size: 0.20 μm)

<Light stabilizer>

·Light stabilizer D: HALS-based light stabilizer (trade name "TINUVIN 770DF", manufactured by Ciba Specialty Chemicals Limited)

With respect to Examples 14 to 20, the following evaluations were carried out.

Evaluation of the flame retardance test, the flammability test in terms of oxygen index (OI value), the Izod impact test and the workability test were carried out in the same manner as in Examples 1 to 13 and Comparative Examples 1 to 20.

In addition, evaluation of a long-term-accelerated weathering test was carried out as follows.

<Long-term-accelerated weathering test>

Each sample of Examples 14 to 20 was irradiated for 1,000 hours in total, using a super UV irradiator by which high acceleration magnification of degradation is achieved (I-Super UV tester SUV-W151, manufactured by Iwasaki Electric Co., Ltd.). The irradiated specimen is a dumbbell No. 2 specimen in conformity with a tensile test (JIS-K7113). After irradiation, the tensile test (JIS-K7113) was carried out, to measure tensile yield strength. At that time, measured was what percentage of the tensile yield strength is maintained by the specimen after irradiation for 1,000 hours, with respect to the tensile yield strength before irradiation (initial characteristics). Maintenance of 90% or more was ranked as ○ (good), maintenance of 80% or more and less than 90 was ranked as △(moderate), and maintenance of less than 80 was ranked as ×(poor).

In this regard, the irradiation was carried out by 2 methods of intermittent irradiation and sequential irradiation.

[UV irradiation conditions of a long-term-accelerated weathering test (intermittent irradiation)]

Irradiation method: intermittent irradiation, cyclic method: light irradiation → dew condensation → intermission cycle

(1 cycle time)
Irradiation time: 1.7 hours, condensation time: 0.3 hours, intermission time: 0.1 hours
(Light irradiation)
Irradiation temperature: 63°C, irradiation relative humidity: 50%, ultraviolet illuminance: from 90 to 100 mW/cm$^2$
(Dew condensation)
Shower time: 20 seconds, shower interval time: 1 minute
(Intermission)
Intermission temperature: 50°C, intermission relative humidity: 80%

[UV irradiation conditions of a long-term-accelerated weathering test (sequential irradiation)]

Irradiation method: sequential irradiation
Irradiation temperature: 63°C, irradiation relative humidity: 50%, ultraviolet illuminance: from 90 to 100 mW/cm$^2$

The obtained results are shown together in the following Table 5.

Table 5

| | Ex 14 | Ex 15 | Ex 16 | Ex 17 | Ex 18 | Ex 19 | Ex 20 |
|---|---|---|---|---|---|---|---|
| Waste plastic 1 | 100 | 100 | 100 | 100 | 100 | 100 | 100 |
| Magnesium hydroxide A1 | 29 | 23 | 23 | 23 | 23 | 23 | 23 |
| Magnesium hydroxide A2 | - | - | - | - | - | - | - |
| Magnesium hydroxide A3 | - | - | - | - | - | - | - |
| Magnesium hydroxide A4 | - | - | - | - | - | - | - |

(continued)

| | Ex 14 | Ex 15 | Ex 16 | Ex 17 | Ex 18 | Ex 19 | Ex 20 |
|---|---|---|---|---|---|---|---|
| Calcium carbonate B | 31 | 31 | 31 | 31 | 31 | 31 | 31 |
| Titanium oxide C | 4.3 | 3.1 | 2.3 | - | 3.1 | 2.3 | - |
| Light stabilizer D | 0.15 | 0.15 | 0.15 | 0.15 | - | - | - |
| Flame retardance test | ○ | ○ | ○ | ○ | ○ | ○ | ○ |
| OI value (%) | 21.1 | 21.4 | 20.9 | 21.1 | 20.9 | 20.9 | 21.1 |
| Workability | ○ | ○ | ○ | ○ | ○ | ○ | ○ |
| Izod impact strength (kJ/m$^2$) | 6.2 | 6.7 | 6.5 | 6.2 | 5.7 | 6.6 | 6.2 |
| Impact resistance | ○ | ○ | ○ | ○ | ○ | ○ | ○ |
| Long-term-accelerated weathering test (UV irradiation method: intermittent irradiation) | ○ | ○ | ○ | Δ | Δ | Δ | × |
| Long-term-accelerated weathering test (UV irradiation method: sequential irradiation) | ○ | ○ | ○ | Δ | Δ | Δ | × |

As is apparent from Table 5, it is understood that, by respectively adjusting the content of a magnesium hydroxide and the content of a calcium carbonate to the range according to the present invention, Examples 14 to 20 meet the criteria for the flame retardance in terms of the self-extinguishing characteristics, and at the same time, the sample specimens have high OI value (volume%) which is a minimum oxygen concentration necessary for the continuation of burning, and the sample specimens are excellent in ignition resistance and also are excellent in impact resistance.
In addition, from comparison between Examples 14 to 16 and Examples 17 to 20, it is understood that a long-term weather resistance is further improved, by addtion of a titanium oxide and a light stabilizer in combination.

## Claims

1. A cable trough molded article formed of a flame-retardant resin composition, comprising a resin (A) containing from 10 to 85 mass% of a polyethylene, from 4 to 85 mass% of a polypropylene, and from 0 to 40 mass% of a polystyrene, and satisfying both the following relationships (1) and (2), provided that the amount of a magnesium hydroxide (B) is y mass parts and the amount of a calcium carbonate (C) is x mass parts with respect to 100 mass parts of the resin (A),

   wherein the value of the molded article obtained by injection-molding the flame-retardant resin composition, which is obtained by Izod impact test (thickness of specimen 4 mm, notch 2 mm) in accordance with JIS K7110, is 5.0 kJ/m$^2$ or more, and
   wherein the flame-retardant resin composition meets the criteria of "the flame retardance having self-extinguishing characteristics of the tube or trough housing underground electric wires" Test method JESC E7003 (2005)":

$$(1) \quad 48 \geqq x \geqq 10;$$

$$(2) \quad 30 > y \geqq -0.19x + 28.8.$$

2. The cable trough molded article formed of the flame-retardant resin composition according to claim 1, wherein the magnesium hydroxide (B) is surface-treated with an aliphatic acid.

3. The cable trough molded article formed of the flame-retardant resin composition according to claim 1 or claim 2, wherein an average particle size of the calcium carbonate is 4 μm or less.

4. The cable trough molded article formed of the flame-retardant resin composition according to any one of claims 1 to 3, wherein a resin component contained in the flame-retardant resin composition to form the cable trough molded article only consists of polyethylene, polypropylene, and polystyrene.

5. The cable trough molded article formed of the flame-retardant resin composition according to any one of claims 1 to 4, wherein the resin of the resin (A) selected from at least the polyethylene, polypropylene, and polystyrene comprises a waste plastic.

6. The cable trough molded article formed of the flame-retardant resin composition according to any one of claims 1 to 5, wherein the flame-retardant resin composition further comprises a titanium oxide,
wherein a content of the titanium oxide is from 0.7 to 25 mass parts with respesct to 100 mass parts of the resin (A).

**Patentansprüche**

1. Kabelkanal-Formkörper, der aus einer flammhemmenden Harzzusammensetzung gebildet ist, die ein Harz (A) umfasst, das 10 bis 85 Massen-% eines Polyethylens, 4 bis 85 Massen-% eines Polypropylens und 0 bis 40 Massen-% eines Polystyrols enthält, und die beiden folgenden Beziehungen (1) und (2) erfüllt, mit der Maßgabe, dass die Menge eines Magnesiumhydroxids (B) y Massenteile und die Menge eines Calciumcarbonats (C) x Massenteile in Bezug auf 100 Massenteile des Harzes (A) beträgt,
wobei der Wert des durch Spritzgießen der flammhemmenden Harzzusammensetzung erhaltenen Formkörpers, der durch Izod-Schlagprüfung (Dicke der Probe 4 mm, Kerbe 2 mm) gemäß JIS K7110 erhalten wird, 5,0 kJ/m$^2$oder mehr beträgt, und
wobei die flammhemmende Harzzusammensetzung die Kriterien der "Flammhemmung mit selbstverlöschenden Eigenschaften des Rohrs oder des Kanals, in denen unterirdische elektrische Drähte untergebracht sind" Testmethode JESC E7003 (2005)" erfüllt:

$$(1)\ 48 \geqq x \geqq 10;$$

$$(2)\ 30 > y \geqq -0,19x+28,8.$$

2. Kabelkanal-Formkörper aus der flammhemmenden Harzzusammensetzung nach Anspruch 1, wobei das Magnesiumhydroxid (B) mit einer aliphatischen Säure oberflächenbehandelt ist.

3. Kabelkanal-Formkörper, der aus der flammhemmenden Harzzusammensetzung nach Anspruch 1 oder 2 gebildet ist, wobei die durchschnittliche Teilchengröße des Calciumcarbonats 4 μm oder weniger beträgt.

4. Kabelkanal-Formkörper, der aus der flammhemmenden Harzzusammensetzung nach einem der Ansprüche 1 bis 3 gebildet ist, wobei eine in der flammhemmenden Harzzusammensetzung enthaltene Harzkomponente zur Bildung des Kabelkanal-Formkörpers nur aus Polyethylen, Polypropylen und Polystyrol besteht.

5. Kabelkanal-Formkörper, der aus der flammhemmenden Harzzusammensetzung nach einem der Ansprüche 1 bis 4 gebildet ist, wobei das Harz des Harzes (A), das zumindest aus dem Polyethylen, Polypropylen und Polystyrol ausgewählt ist, Kunststoffabfall umfasst.

6. Kabelkanal-Formkörper, der aus der flammhemmenden Harzzusammensetzung nach einem der Ansprüche 1 bis 5 gebildet ist, wobei die flammhemmende Harzzusammensetzung ferner ein Titanoxid enthält,
wobei der Gehalt des Titanoxids 0,7 bis 25 Massenteile bezogen auf 100 Massenteile des Harzes (A) beträgt.

**Revendications**

1. Article moulé en chemin de câble formé d'une composition de résine ignifuge, comprenant une résine (A) contenant de 10 à 85 % en masse de polyéthylène, de 4 à 85 % en masse de polypropylène, et de 0 à 40 % en masse de polystyrène, et satisfaisant aux relations suivantes (1) et (2), à condition que la quantité d'hydroxyde de magnésium (B) soit de y parties en masse et que la quantité de carbonate de calcium (C) soit de x parties en masse par rapport à 100 parties en masse de la résine (A),
dans lequel la valeur de l'article moulé obtenu par le moulage par injection de la composition de résine ignifuge, qui est obtenue par l'essai d'impact Izod (épaisseur de l'échantillon 4 mm, entaille 2 mm) conformément à la norme JIS K7110, est de 5,0 kJ/m$^2$ ou plus, et

dans lequel la composition de résine ignifuge répond aux critères de "l'ignifugation ayant des caractéristiques d'auto-extinction du tube ou de chemin abritant des fils électriques souterrains" Méthode d'essai JESC E7003 (2005)":

$$(1) \ 48 \geqq x \geqq 10;$$

$$(2) \ 30 > y \geqq -0.19x + 28.8.$$

2. Article moulé en chemin de câble formé de la composition de résine ignifuge selon la revendication 1, dans lequel l'hydroxyde de magnésium (B) est traité en surface avec un acide aliphatique.

3. Article moulé en chemin de câble formé de la composition de résine ignifuge selon la revendication 1 ou la revendication 2, dans lequel une taille moyenne de particule du carbonate de calcium est de 4 μm ou moins.

4. Article moulé en chemin de câble formé de la composition de résine ignifuge selon l'une quelconque des revendications 1 à 3, dans lequel un composant de résine contenu dans la composition de résine ignifuge pour former l'article moulé en chemin de câble consiste uniquement en du polyéthylène, du polypropylène et du polystyrène.

5. Article moulé en chemin de câble formé de la composition de résine ignifuge selon l'une quelconque des revendications 1 à 4, dans lequel la résine de la résine (A) sélectionnée parmi au moins le polyéthylène, le polypropylène et le polystyrène comprend un déchet plastique.

6. Article moulé en chemin de câble formé de la composition de résine ignifuge selon l'une des revendications 1 à 5, dans lequel la composition de résine ignifuge comprend en outre un oxyde de titane, dans laquelle la teneur en oxyde de titane est comprise entre 0,7 et 25 parties en masse par rapport à 100 parties en masse de la résine (A).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005213480 A
- JP 2003004178 A
- JP 2008063558 A
- EP 0831120 A1
- WO 2004074361 A1